# EUROPEAN PATENT SPECIFICATION

(11) **EP 1 295 820 B1**
(45) Date of publication and mention of the grant of the patent: **30.11.2005**
(21) Application number: 01830594.6
(22) Date of filing: 20.09.2001
(51) Int. Cl.: B65G 47/51, B67C 7/00

(54) **Device for the temporary storage of articles in a production line**
Vorrichtung zum vorübergehend Zwischenspeichern von Gegenständen in einer Verarbeitungslinie
Dispositif de stockage temporaire d'articles dans une chaine de production

(43) Date of publication of application: 26.03.2003
(73) Proprietor: SIG Simonazzi S.p.A., 43040 Parma (IT)
(72) Inventor: Ahlers, Egon, c/o Sig Simonazzi S.p.A., 43040 Parma (IT)
(74) Representative: Long, Giorgio

(56) References cited:
- EP-A- 0 427 683
- DE-A- 19 824 846
- FR-A- 2 745 804
- US-A- 6 152 291

## Description

The present invention relates to a device for the temporary storage of articles, in particular of containers, in a production line.

Bottling plants for beverages generally provide for the production of the empty bottles in a production line and their continuous direct forwarding to the subsequent bottling stage, with the intervention only of a rinsing stage. As is known, the bottles are produced in what are known as blowing machines, where the preforms, having been appropriately heated until the plastic softens, are subjected to blowing by means of compressed air under high pressure within a series of dies reproducing the shape of the bottle in negative form. The blown bottles, after the abovementioned rinsing stage, are forwarded, by means of appropriate conveyor systems, such as distribution stars arranged in series, to the filling machine for the bottling of the beverage. When this latter machine is temporarily stopped during the operating phase - for example, in order to correct a technical problem - it is of course necessary also to stop the upstream blowing machine. The stopping of the blowing machine, however, creates serious problems, in that the preforms that are positioned between the heating unit and the blower at the time of stoppage, and which have therefore already undergone the heat treatment, will have to be scrapped.

A similar disadvantage may be encountered, in a plant for the processing of articles comprising two or more processing units in a production line, whenever the accidental stoppage of a downstream processing operation may have adverse effects on an upstream processing operation or the consequent stoppage of the upstream processing unit may have undesirable consequences, such as damage to the articles or wastage of the processing operation taking place. One example of this might be the stoppage of a labelling machine positioned downstream of a station for the continuous sterilization of previously bottled beverages.

DE-A-198 24 846 describes a device for the temporary storage of articles, according to the preamble of claim 1.

It is therefore an object of the present invention to provide a plant for the processing of articles, in particular though not exclusively for the treatment of containers, which resolves the disadvantages of the known art.

This object is achieved by a device for the temporary storage of articles as defined in the appended claims.

Further features and advantages of the device for the temporary storage of articles according to the present invention will for the most part become apparent from the description of an example of embodiment, given below by way of illustration and without implying any limitation, with reference to the following figures:
Figure 1 shows a diagrammatic plan view from above of the device for the temporary storage of articles according to the invention, in a normal operating state;
Figure 2 shows the view shown in Figure 1, in a state of stoppage of the downstream processing station;
Figure 3 shows a perspective view in the direction A according to Figure 1 of a detail of the device according to the invention;

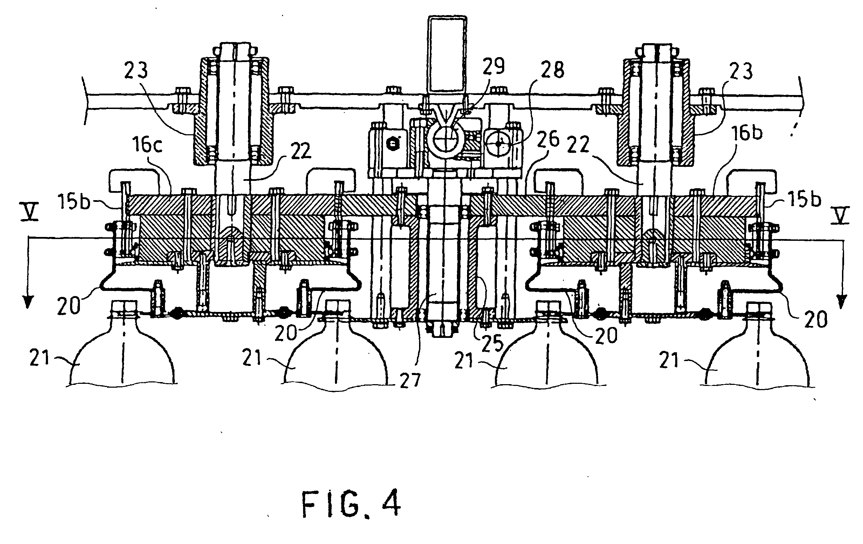

Figure 4 shows a view of a detail of the device according to the invention in the line of section IV-IV according to Figure 1;
Figure 5 shows a view of a detail of the device according to the invention in the line of section V-V according to Figure 4.

With reference to the figures, a description will be given of a plant for the treatment of containers, designated as a whole by the numeral 1, comprising a blowing station 2 for blowing the containers and, downstream, a filling station 3 for filling the containers, the two treatment stations being separated, in a production line, by the storage station 4 forming the subject of the invention.

The blowing station 2, of a conventional type, comprises a blowing carousel 5 to which the previously heated preforms are brought by a distribution star 6, which picks them up from appropriate conveying means (not shown). A second distribution star 7 undertakes the removal of the blown containers from the blowing carousel 5 in order to forward them to the filling station 3 via the conveyor system of the storage station 4 which will be described in due course.

The filling station 3 for filling the containers, which is likewise of a conventional type, comprises a first distribution star 9 which takes the containers from the conveyor system of the storage station 4, a second distribution star 10 which transfers the containers to the filling carousel 11, a third distribution star 12 which transfers the beverage-filled containers from the filling carousel 11 to the capper 13, and a fourth distribution star 14 which removes the capped containers, by means of a conventional conveyor system (not shown), to a further processing operation.

The storage station 4 for storing the containers comprises, as stated previously, a conveyor system for the containers thus structured. A first distribution star 8a is located in a position close to the second distribution star 7 of the blowing station 2, in a manner such as to take the containers from the latter. The said distribution star 8a, of a conventional form and therefore equipped along its perimeter with recesses of a shape and size such as to accommodate the neck of the container, is caused to rotate by an independent motor drive, which will preferably comprise a brushless motor. Immediately downstream of the distribution star 8a is disposed a first toothed belt 15a tensioned between two pulleys 16a, 17a whose axis of rotation is parallel to the axis of rotation of the distribution star 8a. The toothed belt 15a extends along a longitudinal axis substantially orthogonal to the plane that joins the mutually parallel axes of rotation of the distribution star 8a and of the first distribution star 9 of the filling station 3.

Immediately downstream of the first toothed belt 15a are disposed, in the order and in series, a second distribution star 8b, a second toothed belt 15b, a third distribution star 8c, a third toothed belt 15c, a fourth distribution star 8d and a fourth toothed belt 15d, the latter positioned in alignment with the first distribution star 9 of the filling station 3. The toothed belts 15b, 15c, 15d extend along longitudinal axes substantially parallel to the axis of the first toothed belt 15a.

Similarly, the second, the third and the fourth toothed belts 15b, 15c, 15d are tensioned between pairs of pulleys 16b, 17b, 16c, 17c, 16d, 17d, respectively. The axes of rotation of the distribution stars 8a, 8b, 8c, 8d of the storage station 4 and of the pulleys 16a, 16b, 16c, 16d positioned between the said distribution stars all lie in the same vertical plane.

While, as stated previously, the first distribution star 8a of the storage station 4 is caused to rotate by an independent motor drive, the second, the third and the fourth distribution stars 8b, 8c, 8d are undriven. Similarly, the pulleys 16a, 17a; 16b, 17b; 16c, 17c of the first, second and third toothed belts 15a, 15b, 15c rotate without being driven, while the pulley 16d of the fourth toothed belt 15d is connected by means of a belt or similar means of transmission to the first distribution star 9 of the filling station 3, which in turn is equipped with an independent motor drive, such as, for example, a brushless motor. In this manner, the toothed belt 15d is driven by the rotation of the said distribution star 9.

Each of the toothed belts 15a, 15b, 15c, 15d possesses a double set of teeth, specifically an internal set of teeth 18, such as to engage with the respective pulleys 16a, 17a; 16b, 17b; 16c, 17c; 16d, 17d, and an external set of teeth 19. On the outer surface of the said toothed belts 15a, 15b, 15c, 15d is fixed a plurality of grippers 20 susceptible of engaging with the necks of the containers 21, the said grippers 20 being disposed at regular intervals from one another. Each of the pulleys 16a, 17a; 16b, 17b; 16c, 17c; 16d, 17d is fixed to a shaft 22 which is revolvingly accommodated in a seating 23 which, in the example shown in the figures, is formed in the top cover of the machine, so that the toothed belts are suspended from above. This configuration may of course be inverted, all the revolving parts being supported from below.

The distribution stars 8a, 8b, 8c, 8d are of a conventional type, comprising along their perimeters a plurality of recesses 24 susceptible of engaging with the necks of the containers 21, for the transference thereof from one toothed belt to the next. Therefore, the recesses 24 are positioned in the same plane in which lie the grippers 20 of the toothed belts 15a, 15b, 15c, 15d. On the upper surface of each distribution star is fixed a shaft 25, integral at the top with a toothed wheel 26. The toothed wheel 26 of the first distribution star 8a engages with the first toothed belt 15a, while the toothed wheels 26 of the second, third and fourth distribution stars 8b, 8c, 8d engage with both the toothed belts between which are enclosed, respectively, the second distribution star 8b with the first and with the second toothed belt 15a, 15b; the third distribution star 8c with the second and the third toothed belt 15b, 15c; and the fourth distribution star 8d with the third and the fourth toothed belt 15c, 15d. Since only the first distribution star 8a and the fourth toothed belt 15d are set in motion by respective motor drives, it follows that the remaining distribution stars and toothed belts, all undriven, are caused to move by transmission of motion by virtue of the gears described above.

It should be noted, in this context, that the motors which cause the rotation of the first distribution star 8a of the storage station 4 and the first distribution star 9 of the filling station 3 - and hence the fourth toothed belt 15d - are synchronized.

The shaft 25 is hollow and is revolvingly inserted into a cylindrical journal 27, which, in the case of the first distribution star 8a, is fixed to the top cover of the storage station 4. Conversely, in the case of the second, third and fourth distribution stars 8b, 8c, 8d, the journal 27 is fixed at the top to a carriage 28 which slides freely on a track 29. The track 29 is fixed to the top cover of the storage station 4 and extends in a direction parallel to the longitudinal axis of the toothed belts 15a, 15b, 15c, 15d between a departure end and an arrival end, at which are positioned stop means 29'.

In line with the opposite ends of each toothed belt 15a, 15b, 15c, 15d are disposed semicircular guides 30, whose function is that of preventing the containers, in the curved sections of their travel, from becoming disengaged from the grippers 20. Similarly, semicircular guides 31 are associated with each distribution star 8a, 8b, 8c, 8d, in alignment with the portion of the perimeter facing in the direction of sliding on the track 29.

Still with reference to the figures, a description will now be given of the mode of operation of the device for the temporary storage of articles according to the present invention.

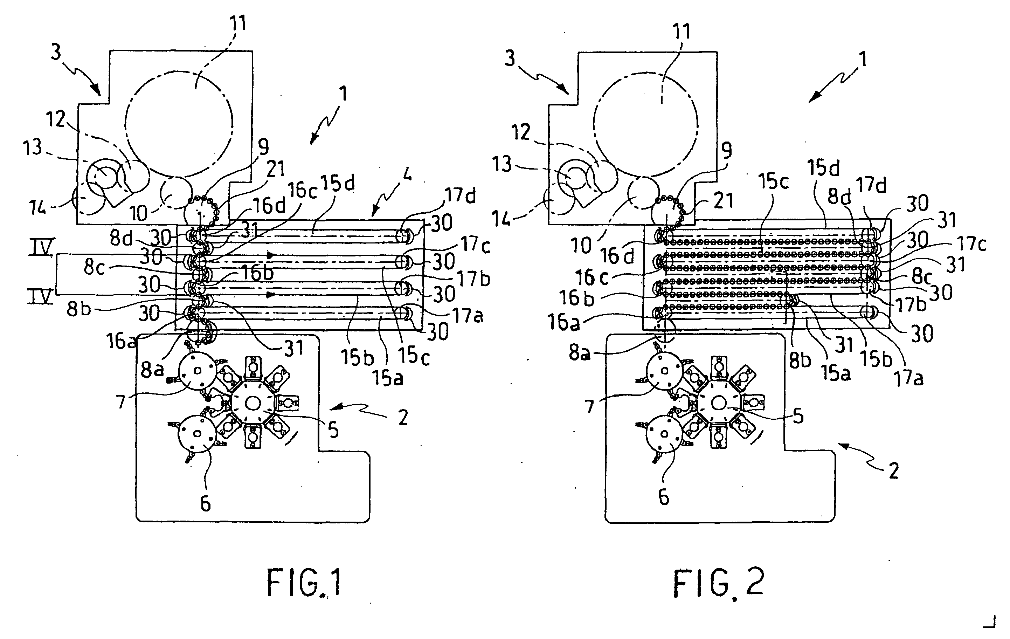

Figure 1 shows the normal mode of operation of the plant. The containers leaving the blowing station 2 are taken from the first distribution star 8a of the storage station 4. The said first distribution star 8a, which, as stated previously, is equipped with an independent motor drive and engages with the first toothed belt 15a, sets the latter in motion. In this way, the containers 21 are transferred onto the grippers 20 of the toothed belt, which in turn deposits them on the second distribution star 8b. The latter is caused to rotate by the first toothed belt 15a and, in this way, transfers the containers onto the second toothed belt 15b. In a manner very similar to that described hereinabove, the containers follow the path shown in Figure 1, passing in sequence from the second toothed belt 15b to the third distribution star 8c, from there to the third toothed belt 15c and to the fourth distribution star 8d, until they arrive at the fourth toothed belt 15d. The latter takes the containers 21 from the fourth distribution star 8d and forwards them to the first distribution star 9 of the filling station 3 and from there to the second star 10 and to the filling machine 11.

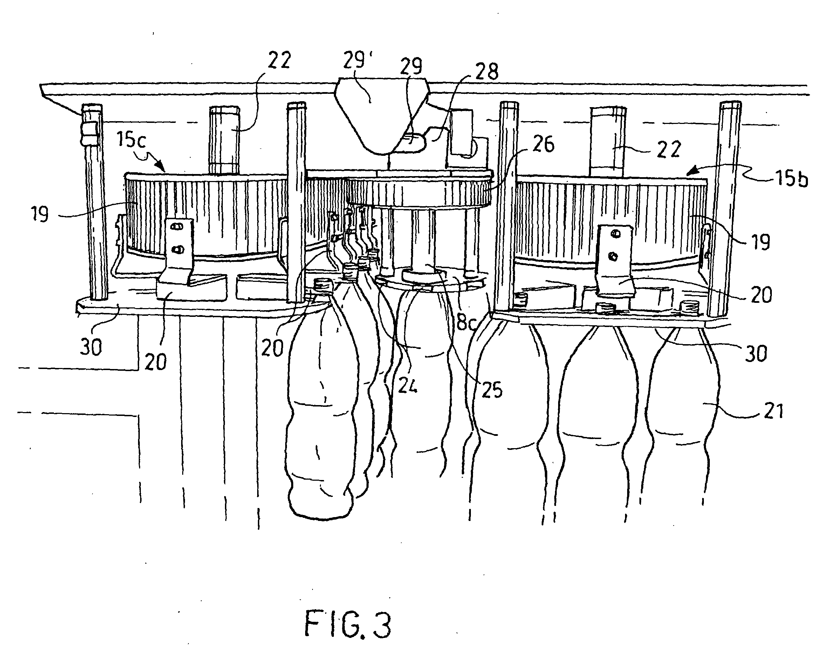

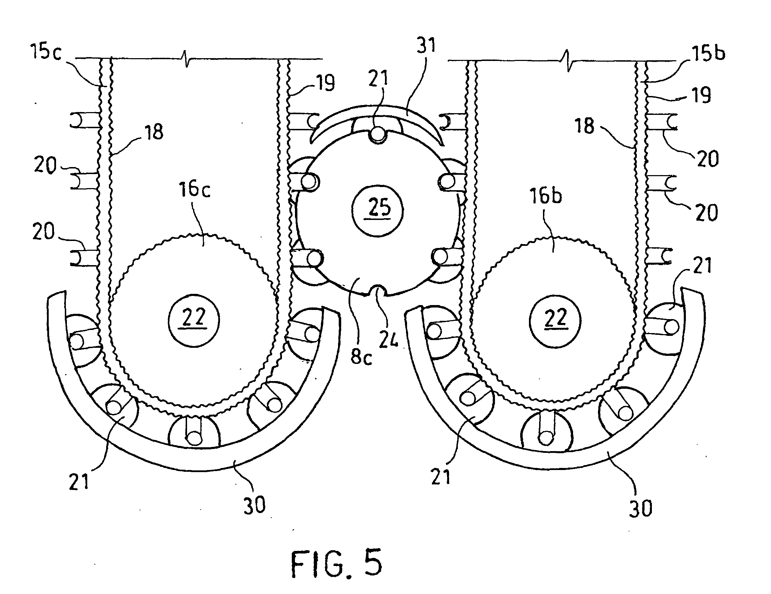

If for any reason the filling carousel 11 has to discontinue operation temporarily, the associated distribution star 9 will stop and, consequently, the fourth toothed belt 15d connected thereto will also halt. Conversely, the first distribution star 8a of the storage station 4 will remain in operation, taking the containers arriving from the blowing carousel 5. Similarly, the second, the third and the fourth distribution stars 8b, 8c, 8d and the first, the second and the third toothed belts 15a, 15b, 15c will remain in operation, driven by the motor drive of the first star 8a, as described previously. At this point, the fourth distribution star 8d, whose toothed wheel 26 engages in rotation with the external set of teeth 19 of the fourth toothed belt 15d, which is now stationary, will be unable to do anything but slide along the track 29 and, during its travel, will deposit the containers 21 on the grippers 20 of the fourth toothed belt 15d, as shown in Figures 3 and 5. When the fourth distribution star 8d has reached the more distant end of the track 29, it will halt, coming into abutment against the associated stop means 29'. Consequently, the third toothed belt 15c will also stop moving. Similarly to what occurs in the case of the fourth distribution star 8d, it will now be the third star 8c that travels along the respective track 29 and deposits the containers 21 on the grippers 20 of the third toothed belt 15c. On reaching the more distant end of the track 29, the third distribution star 8c will also halt, blocking the movement of the second toothed belt 15b. The same operation will be repeated with the second distribution star 8b, until the point of full loading of all the grippers 20 of the toothed belts disposed along the path of the containers. Figure 2 shows by way of example the point at which the second distribution star 8b has travelled a little more than half-way along the respective track 29: the containers 21 are disposed within the storage station 4 along a serpentine path.

It should be noted that the entry of the preforms into the preheating station positioned upstream of the blowing station 2 is suspended as soon as the filling station 3 halts. The preforms already introduced into the preheating zone and from there into the blowing station 2 will still be required to complete their processing operation to produce blown bottles, in order to avoid the production of rejects. Therefore, the storage station 4 will be sized as a function of the number of preforms and containers already undergoing the processing stage upstream, in a manner such that, upon halting of the filling station 3, the storage station 4 frees the upstream stations, acting as a buffer unit.

From what has been stated above, the advantages of the device for the temporary storage of articles according to the present invention will be immediately apparent. Specifically, the storage device allows the upstream treatment station to operate at normal speed, without requiring it to be slowed down, still less halted. The articles at the stage of processing in the upstream station are therefore recovered in their entirety, eliminating any rejects.

Furthermore, the device according to the invention allows automatic, mechanical implementation of the storage of the containers in the storage station 4, without the need for manual intervention to divert the path of the containers from the normal path to the storage path.

It is clear that what has been described is only one particular embodiment of the device for the temporary storage of articles according to the present invention, to which the person skilled in the art will be able to make any modifications necessary to adapt it to specific applications, without thereby departing from the scope of protection of the present invention.

For example, the system of suspending the distribution stars 8a, 8b, 8c, 8d and the toothed belts 15a, 15b, 15c, 15d from above can easily be replaced by the traditional system of support from below, the seatings 23 for the shafts of the pulleys and the track 29 being disposed on an appropriate base.

It is likewise evident that the device according to the present invention will be susceptible of adaptation to any plant for the treatment of articles, including articles other than containers, in which this type of arrangement may become necessary. It will in fact be sufficient to modify the system for the handling of the articles, specifically the grippers 20 and the recesses 24, replacing them with appropriate support means adapted to the shape of the article to be processed. For example, it will be possible for plates for supporting the articles from below to be associated with the distribution stars and the toothed belts.

The toothed belts 15a, 15b, 15c, 15d may be replaced by other belt-type conveying means, for example by untoothed belts, which will engage with corresponding untoothed wheels solidly fixed to the distribution stars. These belt-type conveying means and these untoothed wheels will generally be produced from an appropriate material having a high coefficient of friction, such as, for example, rubber, and will interfere with one another with sufficient pressure to ensure the transmission of the motion. Alternatively, the untoothed wheels will be replaced by other appropriate means for the transmission of the motion, of a conventional type.

## Claims

1. Device for the temporary storage (4) of articles, comprising a plurality of distribution stars (8a, 8b, 8c, 8d) and a plurality of belt-type conveying means (15a, 15b, 15c, 15d) disposed in an alternating manner along a path for the articles positioned between an upstream processing station (2) and a downstream processing station (3), a plurality of support means (20) for the articles being associated with the said belt-type conveying means (15a, 15b, 15c, 15d), a normal path and a storage path for the articles being defined in the said device, the transition from the said normal path to the said storage path being implemented automatically at the time of halting of the said downstream processing station (3), **characterised in that** the said belt-type conveying means are toothed belts (15a, 15b, 15c, 15d) and **in that** each of the said toothed belts (15a, 15b, 15c, 15d) is tensioned between a pair of pulleys (16a, 17a; 16b, 17b; 16c, 17c; 16d, 17d), the last pair of pulleys (16d, 17d), in the direction of advance of the articles, being caused to rotate by an independent motor drive of the downstream processing station (3), while the remaining pairs of pulleys (16a, 17a; 16b, 17b; 16c, 17c) are undriven and **in that** the first distribution star (8a), in the direction of advance of the articles, is caused to rotate by an independent motor drive, while the remaining distribution stars (8b, 8c, 8d) are undriven.

2. Device according to Claim 1, wherein the said belt-type conveying means (15a, 15b, 15c, 15d) are disposed along longitudinal axes substantially orthogonal to the direction of alignment of the said distribution stars (8a, 8b, 8c, 8d) in the state of the normal path for the articles.

3. Device according to Claim 1, wherein the said motor drive of the first distribution star (8a) and the said motor drive of the last pair of pulleys (16d, 17d) are operated in synchrony.

4. Device according to any one of Claims 1 to 3, wherein each of the said toothed belts (15a, 15b, 15c, 15d) possesses a internal set of teeth (18), which engages with the said pairs of pulleys (16a, 17a; 16b, 17b; 16c, 17c; 16d, 17d), and a external set of teeth (19) and wherein each of the said distribution stars (8a, 8b, 8c, 8d) is fixed, by means of a shaft (25), to a toothed wheel (26) which engages with the said external set of teeth (19) of the toothed belts (16a, 17a; 16b, 17b; 16c, 17c; 16d, 17d).

5. Device according to Claim 4, wherein each of the said distribution stars (8b, 8c, 8d), with the exception of the first distribution star (8a) in the direction of advance of the articles, is revolvingly engaged with a journal (27) terminating at the opposite end with a carriage (28), the said carriage (28) being slidingly engaged with a track (29) extending in a direction parallel to the longitudinal axis of the said toothed belts (15a, 15b, 15c, 15d), in a manner such that the said distribution stars (8b, 8c, 8d) can be simultaneously subjected to a movement of rotation about themselves and a translatory movement along the said track (29).

6. Device according to Claim 5, wherein each of the said tracks (29) comprises stop means (29') for the carriage (28) at both ends.

7. Device according to any one of Claims 1 to 6, wherein the said articles are containers (21) and the said support means for the articles are grippers (20) adapted to engage with the necks of the said containers (21).

8. Device according to Claim 7, wherein the said distribution stars (8a, 8b, 8c, 8d) possess along their perimeter recesses (24) susceptible of engaging with the necks of the said containers (21).

9. Device according to any one of Claims 1 to 8, wherein the said belt-type conveying means (15a, 15b, 15c, 15d) and the said distribution stars (8a, 8b, 8c, 8d) are supported from above on the top cover of the said device for storage (4).

10. Plant for the treatment of containers (21), in particular bottles, wherein the said device for storage (4) according to any one of claims from 1 to 9 is disposed in a production line between a blowing station (2) for blowing the plastic containers (21) and a filling station (3) for filling the containers (21).

## Patentansprüche

1. Vorrichtung (4) zum vorübergehenden Zwischenlagern von Artikeln, umfassend:
eine Mehrzahl von Verteilungssternen (8a, 8b, 8c, 8d) und eine Mehrzahl von riemenartigen Fördereinrichtungen (15a, 15b, 15c, 15d), die in einer abwechselnden Weise entlang einer Strecke für die Artikel, die zwischen einer stromaufwärtsseitigen Bearbeitungsstation (2) und einer stromabwärtsseitigen Bearbeitungsstation (3) positioniert ist,
eine Mehrzahl von Rückhalteeinrichtungen (20) für die Artikel, die den riemenartigen Fördereinrichtungen (15a, 15b, 15c, 15d) zugeordnet sind,
eine normale Strecke und eine Zwischenlagerstrecke für die Artikel, die in der Vorrichtung definiert sind, wobei der Übergang von der normalen Strecke zur Zwischenlagerstrecke automatisch zum Zeitpunkt des Anhaltens der stromabwärtsseitigen Bearbeitungsstation (3) durchgeführt wird,
**dadurch gekennzeichnet, dass**
die riemenartigen Fördereinrichtungen Zahnriemen (15a, 15b, 15c, 15d) sind,
und dass jeder der Zahnriemen (15a, 15b, 15c, 15d) zwischen einem Paar von Riemenscheiben (16a, 17a; 16b, 17b; 16c, 17c; 16d, 17d) gespannt ist, wobei das letzte Paar von Riemenscheiben (16d, 17d) in Vorlaufrichtung der Artikel durch einen unabhängigen Motorantrieb der stromabwärtsseitigen Bearbeitungsstation (3) gedreht wird, während die verbleibenden Paare von Riemenscheiben (16a, 17a; 16b, 17b; 16c, 17c) nicht angetrieben werden,
und dass der erste Verteilungsstern (8a) in Vorlaufrichtung der Artikel durch einen unabhängigen Motorantrieb gedreht wird, während die verbleibenden Verteilungssterne (8b, 8c, 8d) nicht angetrieben werden.

2. Vorrichtung gemäß Anspruch 1, wobei die riemenartigen Fördereinrichtungen (15a, 15b, 15c, 15d) entlang der Längsachsen angeordnet sind, die im Wesentlichen senkrecht zur Richtung der Ausrichtung der Verteilungssterne (8a, 8b, 8c, 8d) im Zustand der normalen Strecke für die Artikel sind.

3. Vorrichtung gemäß Anspruch 1, wobei der Motorantrieb des ersten Verteilungssterns (8a) und der Motorantrieb des letzten Paares von Riemenscheiben (16d, 17d) synchron betrieben werden.

4. Vorrichtung gemäß einem der Ansprüche 1 bis 3, wobei jeder Zahnriemen (15a, 15b, 15c, 15d) einen inneren Satz von Zähnen (18) aufweist, die mit den Paaren von Riemenscheiben (16a, 17a; 16b, 17b; 16c, 17c; 16d, 17d) in Eingriff sind, und einen äußeren Satz von Zähnen (19) aufweist und wobei jeder der Verteilungssterne (8a, 8b, 8c, 8d) mittels einer Welle (25) an einem Zahnrad (26) fixiert ist, das mit dem äußeren Satz von Zähnen (19) der Zahnriemen (16a, 17a; 16b, 17b; 16c, 17c; 16d, 17d) in Eingriff ist.

5. Vorrichtung gemäß Anspruch 4, wobei jeder der Verteilungssterne (8b, 8c, 8d), mit Ausnahme des ersten Verteilungssterns (8a), in der Vorlaufrichtung der Artikel, sich drehend mit einem Zapfen (27), der am entgegenliegenden Ende mit einem Schlitten (28) abschließt, in Eingriff ist, wobei der Schlitten (28) mit einer Laufbahn (29), die sich in einer Richtung parallel zur Längsachse der Zahnriemen (15a, 15b, 15c, 15d) erstreckt, in der Weise gleitend in Eingriff ist, dass die Verteilungssterne (8b, 8c, 8d) gleichzeitig einer Drehbewegung um sich selbst und einer translatorischen Bewegung entlang der Laufbahn (29) unterliegen können.

6. Vorrichtung gemäß Anspruch 5, wobei jede der Laufbahnen (29) eine Stoppeinrichtung (29') für den Schlitten (28) an beiden Enden umfasst.

7. Vorrichtung gemäß einem der Ansprüche 1 bis 6, wobei die Artikel Behälter (21) und die Rückhalteeinrichtungen für die Artikel Greifer (20) sind, die mit den Kragen der Behälter (21) in Eingriff sind.

8. Vorrichtung gemäß Anspruch 7, wobei die Verteilungssterne (8a, 8b, 8c, 8d) entlang ihres Umfangs Aussparungen (24) aufweisen, die zum Eingriff mit den Kragen der Behälter (21) geeignet sind.

9. Vorrichtung gemäß nach einem der Ansprüche 1 bis 8, wobei die riemenartigen Fördereinrichtungen (15a, 15b, 15c, 15d) und die Verteilungssterne (8a, 8b, 8c, 8d) von oben auf dem Deckel der Vorrichtung (4) zum Zwischenlagern abgestützt werden.

10. Anlage zur Bearbeitung von Behältern (21), insbesondere Flaschen, wobei die Vorrichtung (4) zum Zwischenlagern gemäß einem der Ansprüche 1 bis 9 in einer Fertigungsstraße zwischen einer Blasstation (2) zum Blasen der Kunststoffbehälter (21) und einer Füllstation (3) zum Befüllen der Behälter (21) angeordnet ist.

## Revendications

1. Dispositif pour le stockage temporaire (4) d'articles, comprenant une pluralité d'étoiles de distribution (8a, 8b, 8c, 8d) et une pluralité de moyens convoyeurs du type à courroie (15a, 15b, 15c, 15d) disposés en étant alternés le long d'une trajectoire pour les articles positionnés entre un poste de traitement d'amont (2) et un poste de traitement d'aval (3), une pluralité de moyens de support (20) pour les articles étant associés auxdits moyens convoyeurs du type à courroie (15a, 15b, 15c, 15d), une trajectoire normale et une trajectoire de stockage pour les articles étant définie dans ledit dispositif, la transition de ladite trajectoire normale à ladite trajectoire de stockage étant réalisée automatiquement au moment de l'arrêt dudit poste de traitement d'aval (3), **caractérisé en ce que** lesdits moyens convoyeurs du type à courroie sont des courroies dentées (15a, 15b, 15c, 15d), **en ce que** chacune desdites courroies dentées (15a, 15b, 15c, 15d) est tendue entre deux poulies en une paire (16a, 17a ; 16b, 17b ; 16c, 17c ; 16d, 17d), la dernière paire de poulies (16d, 17d), dans le sens d'avancée des articles, étant amenée à tourner par une commande par moteur indépendante du poste de traitement d'aval (3), tandis que les paires restantes de poulies (16a, 17a ; 16b, 17b ; 16c, 17c) ne sont pas entraînées et **en ce que** la première étoile de distribution (8a), dans le sens d'avancée des articles, est amenée à tourner par une commande par moteur indépendante, tandis que les étoiles de distribution restantes (8b, 8c, 8d) ne sont pas entraînées.

2. Dispositif selon la revendication 1, dans lequel lesdits moyens convoyeurs du type à courroie (15a, 15b, 15c, 15d) sont disposés le long d'axes longitudinaux sensiblement orthogonaux au sens d'alignement desdites étoiles de distribution (8a, 8b, 8c, 8d) dans l'état de trajectoire normale pour les articles.

3. Dispositif selon la revendication 1, dans lequel ladite commande par moteur de la première étoile de distribution (8a) et ladite commande par moteur de la dernière paire de poulies (16d, 17d) sont actionnées en synchronisation.

4. Dispositif selon l'une quelconque des revendications 1 à 3, dans lequel chacune desdites courroies dentées (15a, 15b, 15c, 15d) possède un jeu interne de dents (18), qui s'engage avec lesdites paires de poulies (16a, 17a ; 16b, 17b ; 16c, 17c ; 16d, 17d), et un jeu externe de dents (19) et dans lequel chacune desdites étoiles de distribution (8a, 8b, 8c, 8d) est fixée, au moyen d'un arbre (25), à une roue dentée (26) qui s'engage avec ledit jeu externe de dents (19) des courroies dentées (16a, 17a ; 16b, 17b ; 16c, 17c ; 16d, 17d).

5. Dispositif selon la revendication 4, dans lequel chacune desdites étoiles de distribution (8b, 8c, 8d), à l'exception de la première étoile de distribution (8a) dans le sens d'avancée des articles, est engagée en rotation avec un tourillon (27) se terminant à son extrémité opposée par un chariot (28), ledit chariot (28) étant engagé en coulissement avec une voie (29) s'étendant dans une direction parallèle à l'axe longitudinal desdites courroies dentées (15a, 15b, 15c, 15d), de telle sorte que lesdites étoiles de distribution (8b, 8c, 8d) peuvent être simultanément soumises à un mouvement de rotation sur elles-mêmes et un mouvement de translation le long de ladite voie (29).

6. Dispositif selon la revendication 5, dans lequel chacune desdites voies (29) comprend un moyen de butée (29') pour le chariot (28) aux deux extrémités.

7. Dispositif selon l'une quelconque des revendications 1 à 6, dans lequel lesdits articles sont des récipients (21) et lesdits moyens de support pour les articles sont des pinces (20) conçues pour s'engager avec les goulots desdits récipients (21).

8. Dispositif selon la revendication 7, dans lequel lesdites étoiles de distribution (8a, 8b, 8c, 8d) possèdent, le long de leur périmètre, des évidements (24) susceptibles de s'engager avec les goulots desdits récipients (21).

9. Dispositif selon l'une quelconque des revendications 1 à 8, dans lequel lesdits moyens convoyeurs du type à courroie (15a, 15b, 15c, 15d) et lesdites étoiles de distribution (8a, 8b, 8c, 8d) sont supportés depuis le dessus sur le couvercle supérieur dudit dispositif pour stockage (4).

10. Installation pour le traitement de récipients (21), en particulier des bouteilles, dans lequel ledit dispositif pour stockage (4) selon l'une quelconque des revendications 1 à 9 est disposé sur une chaîne de fabrication entre un poste de soufflage (2) pour souffler les récipients (21) en plastique et un poste de remplissage (3) pour remplir les récipients (21).
